# EUROPEAN PATENT SPECIFICATION

(11) **EP 0 903 389 B1**
(45) Date of publication and mention of the grant of the patent: **16.09.2009**
(21) Application number: 97924296.3
(22) Date of filing: 02.06.1997
(51) Int. Cl.: C09K 3/00, C09K 3/18, C09D 1/00, C09D 5/14, C09D 5/16, C09D 127/12, C09D 183/04, B05D 5/00, A61L 27/00, C08K 3/22, C09D 183/10

(54) **ANTIFOULING MEMBER AND ANTIFOULING COATING COMPOSITION**
ANTIFOULING ELEMENTE UND ANTIFOULING ÜBERZUGZUSAMMENSETZUNG
ELEMENT ANTI-ENCRASSEMENT ET COMPOSITION POUR REVETEMENT ANTI-ENCRASSEMENT

(30) Priority: 31.05.1996 JP 17538696; 24.09.1996 JP 28722596
(43) Date of publication of application: 24.03.1999
(60) Divisional application: 09009679.3
(73) Proprietor: Toto Ltd., Kitakyushu-shi, Fukuoka 802 (JP)
(72) Inventor: WATANABE, Toshiya, Toto Ltd., Kitakyushu-shi, Fukuoka 802 (JP); HAYAKAWA, Makoto, Toto Ltd., Kitakyushu-shi, Fukuoka 802 (JP); MACHIDA, Mitsuyoshi, Toto Ltd., Kitakyushu-shi, Fukuoka 802 (JP)
(74) Representative: Grünecker, Kinkeldey, Stockmair & Schwanhäusser Anwaltssozietät
(86) International application number: PCT/JP1997/001872
(87) International publication number: WO 1997/045502

(56) References cited:
- JP-A- 8 003 544
- JP-A- 8 034 973
- JP-A- 8 134 381
- JP-A- 8 134 437
- US-A- 5 331 074

## Description

### Field of the Invention

The present invention relates to a member having a surface on which a material is less likely to be deposited, more specifically a member having an antifouling surface on which the so-called "stains," such as deposits and contaminants, are less likely to be deposited.

### Background Art

In the field of buildings and coatings, the pollution of the environment has posed a problem of contamination of exterior materials for buildings, outdoor buildings, and coatings provided thereon.

Dust and particles floating in the air deposit on the roof and the outer wall of buildings in fine weather. Upon exposure to rainfall, the deposits flow together with rainwater and flow down along the outer wall of the building. Further, in rainy weather, dust and particles floating in the air are carried by rain and flow down on the outer wall of the building and the surface of the outdoor building. As a result, the contaminant adheres on the surface along the course of the rainwater. As the surface dries, soil appears in a stripe pattern on the surface.

Combustion products, such as carbon black, municipal dust, and contaminants of inorganic materials, such as clay particles, constitute the soil on the coating of the exterior material for the building. Such a wide variety of contaminants are considered to render measures for antifouling complicate (Yoshinori Kitsutaka, "Gaiheki Shiage Zairyou No Osen No Sokushin Shiken Houhou (Accelerated Testing Method for Contamination of Finish Materials of Outer Wall)," Journal of Structural and Construction Engineering (Transactions of AIJ), No. 404, October 1989, pp. 15-24).

The use of a water-repellent paint, such as polytetrafluoroethylene (PTFE), has hitherto been considered preferable for preventing the exterior of the building and the like from being soiled. In recent years, however, that the surface of the coating is made hydrophilic as much as possible has become recognized as more effective for municipal dust containing a large amount of a hydrophobic component (Kobunshi, Vol. 44, May 1995. p. 307). Accordingly, coating of buildings with a hydrophilic graft polymer has been proposed in a newspaper ("Japan Chemical Week", January 30, 1995). According to this report, the coating has a hydrophilicity of 30 to 40° in terms of contact angle thereof with water.

Inorganic dust typified by clay minerals has a contact angle thereof with water of 20° to 50° and, hence, has affinity for the graft polymer having a contact angle thereof with water of 30° to 40° and is likely to adhere on the surface of the graft polymer. Therefore, it is considered that the coating of the graft polymer cannot satisfactorily prevent soiling with inorganic dust.

US-A-5 331 074, JP-A-8 134 437, JP-A-8 034 973, JP-A-8 003 544 and JP-A-8 134 381 relate to a substrate with a surface having water-repellant properties.

Although there are proposals wherein the surface of a member is rendered water-repellent or hydrophilic to keep the surface clean, such as those described above, there is still room for improvement in the surface cleaning activity.

### [SUMMARY OF THE INVENTION]

The present inventors have now found that a surface having both a hydrophobic portion, and a hydrophilic portion induced by a photocatalyst has a very good antifouling property. The present invention has been made based on such finding.

Accordingly, an object of the present invention is to provide a member having a surface on which a material is less likely to be deposited,
having an antifouling surface on which the so-called "stains," such as deposits and contaminants, are less likely to be deposited, and having
both a hydrophobic portion, and a hydrophilic portion induced by a photocatalyst, the hydrophobic portion and the hydrophilic portion being present in a microscopically dispersed and exposed state on the surface of the member.

According to the present invention, there is provided a member comprising: a substrate; and a surface layer provided on the substrate, the surface layer comprising a hydrophobic resin and a photocatalytic oxide as defined in claim 1, the hydrophobic resin and the photocatalytic oxide being present in a microscopically dispersed and exposed state on the outermost surface of the member, the photocatalytic oxide being self-hydrophilified or functioning to hydrophilify the photocatalytic oxide still remaining unhydrophilified present around the photocatalytic oxide by photocatalytic action created in response to photoexcitation.

According to the present invention, the hydrophobic portion derived from the hydrophobic resin and the hydrophilic portion induced by the photocatalyst are present in a microscopically dispersed state on the outermost surface of the member. As a result of the hydrophobic portion and the hydrophilic portion adjacent to each other, a hydrophilic deposit having affinity for the hydrophilic portion does not have affinity for the adjacent water-repellent portion. On the other hand, a hydrophobic deposit having affinity for the hydrophobic portion does not have affinity for the adjacent hydrophilic portion. Therefore, it is considered that both the hydrophilic deposit and the hydrophobic deposit cannot deposit on the surface of the member, and, even when deposited on the surface of the member, are unstable and hence are easily removed, permitting the surface of the member to be kept clean. In this connection, however, it should be noted that the above description is hypothetical and the present invention is not limited to the above mechanism alone.

### [BRIEF DESCRIPTION OF THE DRAWINGS]

Fig. 1 is a diagram illustrating how to install a test sample in Example 2. In the drawing, the member 1 according to the present invention is installed on the wall surface of a house 11 so as to be exposed to sunlight from the sun 10.
Fig. 2 is a diagram showing the structure of a member according to the present invention. A member 21 according to the present invention comprises a surface layer 23 provided on a substrate 22. The surface layer 23 comprises a hydrophobic resin layer 24 and a photocatalytic oxide 25 dispersed in the layer 24, the photocatalytic oxide 25 being present in an exposed state on the outermost surface of the layer 24.
Fig. 3 is a diagram of a member having the same construction as the member according to the aspect shown in Fig. 2, except that the surface layer 23 further comprises an inorganic oxide 26.
Fig. 4 is a diagram showing a second embodiment of the present invention. A member 21 according to the present invention comprises a layer 24, formed of a photocatalytic oxide, and a layer 28, formed of a hydrophobic resin, provided on the layer 24. In this case, the layer 28 formed of a hydrophobic resin is laminated onto a part of the layer 24. As a result, the hydrophobic resin and the photocatalytic oxide are present in a microscopically dispersed and exposed state on the outermost surface of the surface layer 23.
Fig. 5 is a diagram of a member having the same construction as the member according to the embodiment shown in Fig. 4, except that the layer 24 comprising a photocatalytic oxide further comprises an inorganic oxide 29.

### [DETAILED DESCRIPTION OF THE INVENTION]

### Definition

In the present invention, the terms "antifouling property" and "antifouling activity" are used to mean any of such properties that a certain surface is inert to deposition of a material thereon, that is, a property that various materials are less likely to be deposited on a certain surface, and a property that materials, even when once deposited on a certain surface, can be easily removed.

Further, in the present invention, the presence of the hydrophobic portion and the hydrophilic portion in a "microscopically dispersed state" on the surface means that the hydrophobic portion and the hydrophilic portion are homogeneously present per unit area of not more than about 0.1 mm².

Further, in the present invention, the term "photocatalyst" used herein refers to a material which, when exposed to light (excitation light) having higher energy (i.e., shorter wavelength) than the energy gap between the conduction band and the valence band of the crystal, can cause excitation (photoexcitation) of electrons in the valence band to produce a conduction electron and a hole. Photocatalytic oxides used herein are selected from anatase form of titanium oxide, zinc oxide, tin oxide, ferric oxide, dibismuth trioxide, tungsten trioxide, and strontium titanate.

### Antifouling member according to the present invention

The member according to the present invention comprises a substrate and a surface layer provided on the substrate, the surface layer comprising a hydrophobic resin and a photocatalytic oxide as defined in claim 1. The hydrophobic resin and the photocatalytic oxide are present in a microscopically dispersed and exposed state on the outermost surface of the surface layer.

The member according to the present invention has, on its outermost surface, a hydrophobic portion, and a hydrophilic portion induced by a photocatalyst. As a result, both hydrophilic deposits and hydrophobic deposits cannot be deposited on the surface of the member, and, even when deposited on the surface of the member, are unstable and hence are easily removed, permitting the surface of the member to be kept clean. Therefore, the member according to the present invention may be used in the following applications.

Specifically, examples of applications include building materials, exterior of buidlings, interior of buildings, sashes, windowpanes, structural members, plates, exterior and coating of vehicles, exterior of machineries and articles, dustproof covers and coatings, reflector plates for traffic signs, various display devices, advertising towers or poster columns, noise barriers for roads, noise barriers for rail roads, decorative plates for roads, light source covers for signals, display panels for outdoors, bridges, exterior and coating of guard rails, interior and coating of tunnels, lighting apparatuses for interior of tunnels, insulators, covers for solar cells, covers for solar energy collectors of solar water heaters, vinyl plastic hothouses, covers for lighting of vehicles, mirrors for roads, mirrors for vehicles, instrument covers and instrument panels for two-wheeled vehicles, glass lenses, plastic lenses, helmet shields, windowpanes for housings, automobiles and railway vehicles, showcases, showcase for retention of heat, film structures, fins for heat exchangers, glass surfaces for various places, window shades (blinds), tire wheels, roof materials, antennas, power lines, households, stools, bath tubs, wash basins, lighting equipment, covers for lighting, kitchenwares, tablewares, cabinets for tablewares, dishwashers, dishdryers, sinks, cooking ranges, kitchen hoods, ventilation fans, anti-thrombotenic material, anti-protein-depositable materials, bottoms of ships, and films for application on the above articles.

According to a preferred embodiment of the present invention, the surface layer of the member of the present invention further comprises an inorganic oxide. This inorganic oxide, together with the hydrophobic resin and the photocatalytic oxide, is present in a microscopically dispersed and exposed state on the outermost surface of the surface layer. Further, the inorganic oxide is hydrophilified by photocatalytic action created in response to photoexcitation of the photocatalytic oxide. This means that the hydrophilic portion induced by the photocatalyst is further provided in the surface layer by the inorganic oxide.

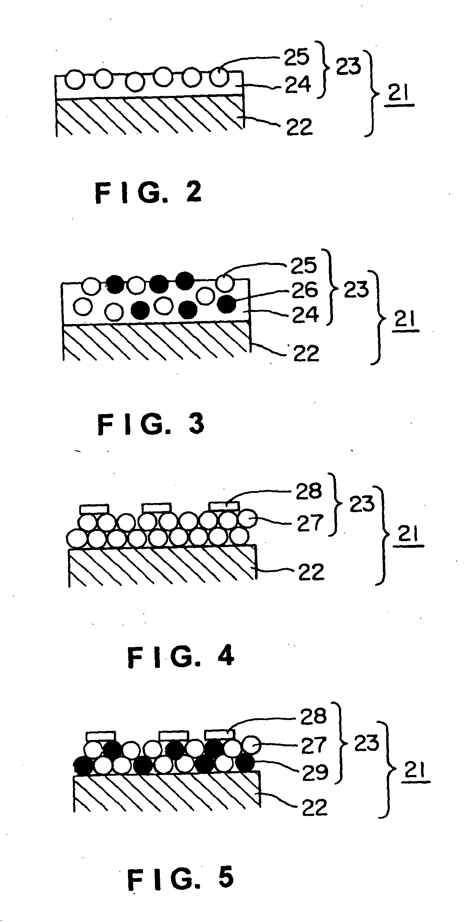

A first preferred embodiment of the present invention is shown in Fig. 2. The member 21 shown in this drawing comprises a surface layer 23 provided on a substrate 22. The surface layer 23 comprises a hydrophobic resin layer 24 and a photocatalytic oxide 25 dispersed in this layer 24. The photocatalytic oxide 25 is present in an exposed state on the outermost surface of the layer 24. In the embodiment shown in this drawing, the photocatalytic oxide is provided as a particle.

In the embodiment shown in Fig. 2, the surface layer 23 may contain an inorganic oxide, and this embodiment is shown in Fig. 3. The embodiment shown in Fig. 3, a particulate inorganic oxide 26, together with the photocatalytic oxide 25, is dispersed in the hydrophobic resin layer 24. The inorganic oxide 26 also is present in an exposed state on the outermost surface of the layer 23.

A second preferred embodiment of the present invention is as shown in Fig. 4. The member 21 shown in this drawing comprises a layer 24, formed of a photocatalytic oxide, and a layer 28, formed of a hydrophobic resin, provided on the layer 24. In this case, the layer 28 formed of a hydrophobic resin is laminated onto a part of the layer 24. Consequently, the hydrophobic resin and the photocatalytic oxide are present in a microscopically dispersed and exposed state on the outermost surface of the surface layer 23.

Further, in the embodiment shown in Fig. 4, the layer 24 formed of a photocatalytic oxide may further contain an inorganic oxide. This embodiment is shown in Fig. 5. In the embodiment shown in Fig. 5, a particulate inorganic oxide 29 is dispersed in the layer formed of a photocatalytic inorganic oxide. This inorganic oxide 29 also is present in an exposed state on the outermost surface of the layer 23.

In the present invention, photocatalytic oxides include those as described above. Further, light sources and irradiation intensity of light may be as follows. Light from sunlight, a room lamp, a fluorescent lamp, a mercury lamp, an incandescent lamp, a xenon lamp, a high pressure sodium lamp, a metal halide lamp, a BLB lamp and the like is preferred. On the other hand, when the photocatalytic oxide is tin oxide, light from a bactericidal lamp, a BLB lamp and the like is preferred. The irradiation intensity of light applied may be suitably determined by taking into consideration the composition of the member, applications of the member and the like. In order to highly hydrophilify the hydrophilic portion of the surface of the member and maintain the highly hydrophilified state, the irradiation intensity of the excitation light is preferably not less than 0.001 mW/cm², more preferably not less than 0.01 mW/cm², most preferably not less than 0.1 mW/cm².

In the present invention, hydrophobic resins include fluororesins, acrylic resins, urethane resins, polyester resins, vinyl resins, PET, and acrylic silicone.

According to a preferred embodiment of the present invention, a fluororesin is utilized as the hydrophobic resin from the viewpoint of lightfastness. Preferred fluororesins include polymers containing a fluoro group, such as polytetrafluoroethylene, polyvinylidene fluoride, polyvinyl fluoride, polychlorotrifluoroethylene, tetrafluoroethylene/hexafluoropropylene copolymer, ethylene/tetrafluoroethylene copolymer, ethylene/chlorotrifluoroethylene copolymer, tetrafluoroethylene/perfluoroalkyl vinyl ether copolymer, perfluorocyclo polymer, vinyl ether/fluoroolefin copolymer, vinyl ester/fluoroolefin copolymer, tetrafluoroethylene/vinyl ether copolymer, chlorotrifluoroethylene/vinyl ether copolymer, urethane-crosslinked tetrafluoroethylene, epoxy-crosslinked tetrafluoroethylene, acryl-crosslinked tetrafluoroethylene, and melamine-crosslinked tetrafluoroethylene. In the present invention, the silicone resin, as compared with the photocatalytic oxide, is present in an amount large enough to serve substantially as a hydrophobic resin.

In the present invention, the level of the hydrophobicity of the hydrophobic resin may be suitably determined so far as the effect of the present invention is attained. For example, the level of the hydrophobicity is preferably not less than 60°, more preferably not less than 120°, in terms of the contact angle of the hydrophobic resin with water.

Inorganic oxides, which are preferably added in the present invention, are not particularly limited so far as they can be hydrophilified by photocatalytic action of the photocatalytic oxide. Examples thereof include silica, alumina, water glass, silicate, aluminosilicate, zirconia, ceria, tin oxide, calcia, magnesia, amorphous titania and other metal oxides. Among them, silica or alumina is particularly preferred from the viewpoint of retention of the hydrophilicity of the hydrophilic portion in a dark place.

The substrate also is not particularly limited. The substrate may be suitably determined by taking the applications of the member into consideration. Specific examples of substrates usable herein include those include metals, ceramics, glasses, plastics, woods, stones, cements, concretes, fibers, woven fabrics, and combinations of the above materials and laminates of the above materials.

The content of the photocatalytic oxide in the surface layer of the member according to the present invention is not particularly limited. For example, the content of the photocatalytic oxide in the surface layer is preferably about 10 to 80% by weight, more preferably about 20 to 50% by weight.

According to a preferred embodiment of the present invention, the thickness of the surface layer may be suitably determined by taking into consideration the composition of the surface layer, applications of the member and the like. For example, when a transparent surface layer is contemplated, the thickness is preferably not more than about 0.4 µm. This can prevent haze development derived from irregular reflection of light, rendering the surface layer substantially transparent. The thickness of the surface layer is more preferably not more than about 0.2 µm from the viewpoint of effectively preventing the color development of the surface layer derived from the interference of light. The smaller the thickness of the surface layer, the better the transparency of the surface layer. However, it is apparent that a given thickness is preferred from the viewpoint of abrasion resistance.

The photocatalytic oxide may be utilized as a particle. Although the particle diameter (crystallite diameter) may be suitably determined, the particle diameter is preferably about 1 to 100 nm, more preferably about 5 to 20 nm.

Also when the inorganic oxide is used as a particle, the particle diameter thereof may be suitably determined. However, the particle diameter is preferably about 1 nm to 1 µm, more preferably about 5 to 100 nm.

For the embodiments shown in the drawings, preferred conditions are as follows.

At the outset, in the embodiment shown in Fig. 2, the thickness of the hydrophobic resin layer 24 is preferably about 10 nm to 10 µm, more preferably about 100 nm to 1 µm. The content of the photocatalytic oxide particle in the layer 24 is preferably about 10 to 80% by weight, more preferably about 20 to 50% by weight. In the embodiment shown in Fig. 3, the content of the photocatalytic oxide particle is preferably about 1 to 80% by weight, more preferably about 20 to 50% by weight, while the content of the inorganic oxide particle is preferably about 1 to 70% by weight, more preferably about 5 to 55% by weight.

Further, in the embodiment shown in Fig. 4, the thickness of the photocatalytic oxide layer 27 is preferably about 10 nm to 1 µm, more preferably about 50 to 400 nm. The thickness of the hydrophobic resin layer overlying the photocatalytic oxide layer 27 is preferably about 1 to 100 nm, more preferably about 5 to 50 nm. In the embodiment shown in Fig. 5, the content of the photocatalytic oxide particle is preferably about 10 to 99% by weight, more preferably about 50 to 99% by weight, while the content of the inorganic oxide particle is preferably about 50 to 90% by weight, more preferably about 5 to 50% by weight.

In the present invention, the proportion of the hydrophobic portion and the hydrophilic portion present on the surface layer also may be suitably determined by taking applications of the member into consideration.

Specifically, the member, wherein the hydrophobic portion and the hydrophilic portion each are present in at least one place per 10 to 100 nm² on the outermost surface of the surface layer, has such a property that biopolymers are less likely to be deposited thereon. Therefore, this member can be applied to anti-thrombotenic materials, anti-protein-depositable materials, anti-lipid-adhesion materials and the like. More specifically, the member may be used as contact lenses and disposable medical instruments, such as urinary catheters, percutaneous devices, various artificial organs, blood bags, urine-collecting bags, lung drainages, and tubes for connection between the above members.

On the other hand, the member, wherein the hydrophobic portion and the hydrophilic portion each are present in at least one place per 10 nm² to 1 µm² on the outermost surface of the surface layer, has such a property that organisms are less likely to be deposited thereon. Therefore, this member may be used as materials for the bottom of ships, outer wall materials, bathroom materials, bathtub materials, materials for water tanks for the appreciation, and surface materials (for example, design tiles) for equipment utilizing circulating water (for example, artificial waterfalls in parks) in its area which comes into contact with the circulating water.

Further, the member, wherein the hydrophobic portion and the hydrophilic portion each are present in at least one place per mm² on the outermost surface of the surface layer, has such a property that a stain derived from suspended smoke and soot in the air is less likely to be deposited thereon, or the stain, even when once deposited thereon, can be easily removed. Therefore, this member may be used as building materials for outdoors, covers for solar batteries, covers for heat collectors for solar water heaters, handrails, internal walls for tunnels, sound insulating walls, sound barriers, guard fences, road structures, such as decorative plates for roads, window shades (blinds), insulators, wheels, and bodies for vehicles, such as automobiles.

Specifically, the member, wherein a hydrophobic portion derived from the water-repellent fluororesin and a hydrophilic portion derived from the silicone or silica each are present in at least one place per 10 to 100 nm² on the outermost surface of the surface layer, has such a property that biopolymers are less likely to be deposited thereon. Therefore, this member can be applied to anti-thrombotenic materials, anti-protein-depositable materials, anti-lipid-adhesion materials and the like. More specifically, the member may be used as contact lenses and disposable medical instruments, such as urinary catheters, percutaneous devices, various artificial organs, blood bags, urine-collecting bags, lung drainages, and tubes for connection between the above members.

On the other hand, the member, wherein a hydrophobic portion derived from the water-repellent fluororesin and a hydrophilic portion derived from the silicone or silica each are present in at least one place per 10 nm² to 1 µm² on the outermost surface of the surface layer, has such a property that organisms are less likely to be deposited thereon. Therefore, this member may be used as materials for the bottom of ships, outer wall materials, bathroom materials, bathtub materials, materials for water tanks for the appreciation, and surface materials (for example, design tiles) for equipment utilizing circulating water (for example, artificial waterfalls in parks) in its area which comes into contact with the circulating water.

Further, the member, wherein a hydrophobic portion derived from the water-repellent fluororesin and a hydrophilic portion derived from the silicone or silica each are present in at least one place per 0.1 mm² on the outermost surface of the surface layer, has such a property that a stain derived from suspended smoke and soot in the air is less likely to be deposited thereon, or the stain, even when once deposited thereon, can be easily removed. Therefore, this member may be used as building materials for outdoors, covers for solar batteries, covers for heat collectors for solar water heaters, handrails, internal walls for tunnels, sound insulating walls, sound barriers, guard fences, road structures, such as decorative plates for roads, window shades (blinds), insulators, wheels, and bodies for vehicles, such as automobiles.

In the member according to the present invention, the contact angle of the surface layer with water is not basically limited so far as the member has an antifouling activity. In general, however, the apparent contact angle of the member with water is about 10 to 120°.

Photocatalytic oxides are known to have antifouling, antimicrobial, and deodorant activities based on the oxidative degradation action. It is believed that, also in the member according to the present invention, this action is maintained. It is believed that the oxidative degradation action of the photocatalyst is more preferably exhibited in the case where the hydrophobic portion derived from the water-repellent fluororesin and the hydrophilic portion derived from the silicone or silica each are present in at least one place per 0.1 mm² on the outermost surface of the surface layer.

Further, the member according to the present invention can effectively prevent the growth of water droplets deposited thereon, and water droplets deposited on the member are rolled over the surface by the action of slight force and easily removed from the surface. Further, ice and snow are not easily deposited on the surface of the member according to the present invention. That is, the member according to the present invention has inhibitory activity against the growth of water droplets, deposition of water droplets, and deposition of ice and snow.

Because the member of the present invention has inhibitory activity against the growth of water droplets, application of the member to glasses, mirrors and the like can effectively prevent the growth of water droplets to such an extent that water droplets scatter light. More specifically, the member can be applied for preventing fogging or ensuring the visibility of glasses, mirrors, lenses, prisms and the like. More specifically, the member can be used as windowpanes for buildings, windowpanes for vehicles, windshields for vehicles, mirrors for vehicles, road mirrors, lavatory mirrors, covers for instrument boards, lenses for spectacles, helmet shields, goggles, and showcases for retention of heat. It is believed that the above action is more preferably exhibited in the case where the hydrophobic portion derived from the water-repellent fluororesin and the hydrophilic portion derived from the silicone or silica each are present in at least one place per 0.2 µm² on the outermost surface of the surface layer.

Further, since the member according to the present invention has inhibitory activity against the deposition of water droplets and against the deposition of ice and snow, the member according to the present invention can be used in applications, such as the prevention of a lowering in efficiency of a heat exchanger due to the deposition of water droplets between fins in an aluminum fin of the heat exchanger, the prevention of a lowering in the insulating property of a bath surface due to the deposition of water (salt) onto the surface of an insulator, the prevention of a deterioration in design due to the deposition of water droplets onto an apron portion of a bathtub, the prevention of accumulation of ice and snow on a roof, the prevention of the formation of an icicle, the prevention of accumulation of ice and snow on an antenna, the prevention of communication troubles, the prevention of accumulation of ice and snow on a power line, and the prevention of conical discharge. More specifically, the member can be used as fins for heat exchangers, insulators, bathtubs, counters for lavatories, kitchen counters, roof materials, roof gutters, antennas, and power lines. According to a preferred embodiment of the present invention, it is believed that the inhibitory activity against the deposition of water droplets and the inhibitory activity against the deposition of ice and snow are more preferably exhibited in the case where the hydrophobic portion derived from the water-repellent fluororesin and the hydrophilic portion derived from the silicone or silica each are present in at least one place per mm² on the outermost surface of the surface layer.

Further, according to the present invention, preferably, a metal, such as silver, copper, or zinc, is added to the surface layer. The surface layer with the above metal added thereto can kill bacteria and mold deposited on the surface thereof even in a dark place and hence can further improve the antifouling property. Further, a platinum group metal, such as platinum, palladium, ruthenium, rhodium, iridium, or osmium, may be added to the surface layer. The surface layer with the above metal added thereto can enhance the redox activity of the photocatalyst and can improve the degradability of organic stains and the degradability of harmful gases and bad smells.

### Production of antifouling member according to the present invention

Preferably, the member according to the present invention is produced as follows.

The member having a construction shown in Fig. 2 or 3 may be produced by coating a substrate with a layer comprising a hydrophobic resin containing a photocatalytic oxide and optionally an inorganic oxide dispersed therein. More specifically, a hydrophobic resin is dissolved in a solvent capable of dissolving the hydrophobic resin, and a photocatalytic oxide and optionally an inorganic oxide are dispersed in the solution to prepare a coating liquid which is then coated on a substrate. Thereafter, the solvent is removed by evaporation to dry the coating and to form a resin layer. Thus, a surface layer is formed on the substrate.

Basically, the photocatalytic oxide and the inorganic oxide are present in an exposed state on the outermost surface of the surface layer, the degree of the exposure of the photocatalytic oxide and the inorganic oxide on the outermost surface of the surface layer being basically proportional to the concentration of the photocatalytic oxide and the inorganic oxide in the coating liquid. In some cases, however, even when the concentration of these materials in the coating liquid is increased, it is difficult to expose the photocatalytic oxide and the inorganic oxide on the outermost surface. In this case, after the formation of the resin layer, the surface of the resin layer may be removed to expose a desired amount of the photocatalytic oxide and the inorganic oxide, present within the layer, on the surface thereof.

Alternatively, the members having constructions as shown in Figs. 2 and 3 may be produced as follows. Specifically, at the outset, a hydrophobic resin precursor composition capable of forming a hydrophobic resin layer is coated on a substrate. An example of the precursor composition is a solution of a hydrophobic resin in a solvent capable of dissolving the hydrophobic resin. On the other hand, the surface of the inorganic oxide and the surface of the photocatalytic oxide are hydrophobified with a hydrophobifying agent. Specific examples of hydrophobifying agents include, for example, silane coupling agents. The hydrophobified photocatalytic oxide and inorganic oxide are coated on the coating of the hydrophobic resin precursor composition formed on the substrate. The surface of the photocatalytic oxide and the surface of the inorganic oxide are now in a hydrophobified state, and, hence, the photocatalytic oxide and the inorganic oxide have good affinity for and can be evenly present on the hydrophobic resin coating. Thereafter, the hydrophobifying agent is removed from the surface of the photocatalytic oxide and the inorganic oxide. The hydrophobifying agent may be removed by a suitable method determined depending upon the type of the hydrophobifying agent. For example, a silane coupling agent can be easily removed by ultraviolet irradiation or etching. The assembly is then cured or dried to induce such a reaction that the precursor composition is converted to a hydrophobic resin layer. Thus, members as shown in the drawings are obtained.

The members having constructions as shown in Figs. 4 and 5 may be produced, for example, by forming a layer comprising a photocatalytic oxide and optionally an inorganic oxide on the surface of a substrate, applying a hydrophobic resin precursor composition, capable of forming a hydrophobic resin layer, on a part of the above layer to form a coating, and subjecting the coating to such a reaction that the coating is converted to a hydrophobic resin layer. More specifically, a composition containing photocatalytic oxide particles and optionally a binder is provided. The composition is coated on a substrate. The coating is subjected to such a reaction that photocatalytic oxide particles are bonded to one another through the binder, thereby forming a photocatalytic oxide layer. A solution containing a hydrophobic resin precursor composition dissolved therein is then applied on a part of the photocatalytic oxide layer. The application of the solution on a part of the photocatalytic oxide layer may be carried out, for example, by applying the precursor composition through a slit having a specific opening pattern. Thereafter, the coating is then subjected to such a reaction that the precursor composition is converted to a hydrophobic resin layer, thereby forming a member.

Alternatively, members having constructions as shown in Figs. 4 and 5 may be produced as follows. Specifically, at the outset, a layer comprising a photocatalytic oxide and optionally an inorganic oxide is formed on the surface of a substrate in the same manner as described above. A composition comprising a photodecomposable hydrophobic material and a hydrophobic resin is applied on the above layer to form a coating. The coating is then irradiated with light to decompose and remove the photodecomposable hydrophobic material, and the coating is subjected to such a reaction that the coating is converted to a hydrophobic resin layer.

Further, members having constructions as shown in Figs. 4 and 5 may be produced as follows. Specifically, at the outset, a layer comprising a photocatalytic oxide and optionally an inorganic oxide is formed on the surface of a substrate in the same manner as described above. A composition comprising a hydrophobic material, dissolvable in a specific solvent, and a hydrophobic resin is applied onto the above layer to form a coating. The specific solvent is brought into contact with the surface of the coating to remove the hydrophobic material, thereby converting the coating layer to a hydrophobic layer to prepare a member. Hydrophobic materials dissolvable in specific solvents are known in the art. Examples of combinations of hydrophobic materials with specific solvents capable of dissolving them include: a combination of polyethylene or polystyrene with a petroleum; a combination of polyacetal or polyamide with a strong alkali; a combination of polyacetal, ABS, or acryl with a strong acid; a combination of low-density polyethylene, polyphenyl oxide, polystyrene, polysulfone, or polyvinyl chloride with a chloro compound solvent; a combination of polyacetal, ABS, polystyrene, or polyvinyl chloride with an amine compound; a combination or acryl, polystyrene, polysulfone, or polyvinyl chloride with a ketone, an ester, an ether; and a combination of ABS, acryl, polyphenylene oxide, polystyrene, or polyvinyl chloride with an aromatic acid compound solvent.

### [EXAMPLES]

### Example 1

A titanium oxide (anatase form) sol (Nissan Chemical Industries Ltd., TA-15), a silica sol (Japan Synthetic Rubber Co., Ltd., liquid A of Glasca), methyltrimethoxysilane (Japan Synthetic Rubber Co., Ltd., liquid B of Glasca), polytetrafluoroethylene (PTFE) particles (Daikin Industries, Ltd., Ruburon L-5), and ethanol were mixed together. The mixture was stirred for 2 to 3 min to prepare a coating liquid. The coating liquid was spray-coated (spray diameter: 0.5 mm) on the surface of a glazed tile substrate having a size of 5 x 10 cm square (TOTO, LTD., AB02E11). The coating was heat treated for 15 min at 200°C to form a surface layer comprising 33 parts by weight, based on charge weight, of titanium oxide (anatase form) particles, 66 parts by weight, based on charge weight, of polytetrafluoroethylene, 6 parts by weight, based on charge weight, of silica, and 5 parts by weight, based on charge weight, of silicone. The member thus formed was used as sample 4. The contact angle of sample 4 with water was 110°.

The surface of sample 4 was then irradiated with ultraviolet light from an ultraviolet light source (Sankyo Denki, a black light blue (BLB) fluorescent lamp) at an ultraviolet irradiation intensity of 0.3 mW/cm² for one day. The member thus prepared was used as sample 5. The contact angle of sample 5 with water was 97.4°, that is, was somewhat lower than that before the ultraviolet light irradiation. It is expected that photocatalytic action permits organic groups bonded to silicon atoms in a silicone molecule were substituted by hydroxyl groups, resulting in hydrophilification. Therefore, it is considered that the contact angle of the sample with water was somewhat lowered by the hydrophilification. That is, it is considered that, due to the photocatalytic action, organic groups on the surface of sample 5 was substituted by hydroxyl groups, resulting in the formation of a structure wherein both a hydrophilic portion, where a hydrophilified silicone was exposed to the outside air, and a water-repellent portion, where a water-repellent fluororesin was exposed to the outside air, were microscopically dispersed.

### Example 2

Sample 5 prepared in Example 1 was disposed outdoors to determine the capability of the surface of the sample to retain the cleanness against deposits and contaminants. For comparison, a glazed tile plate was disposed outdoors in the same manner as the sample 5.

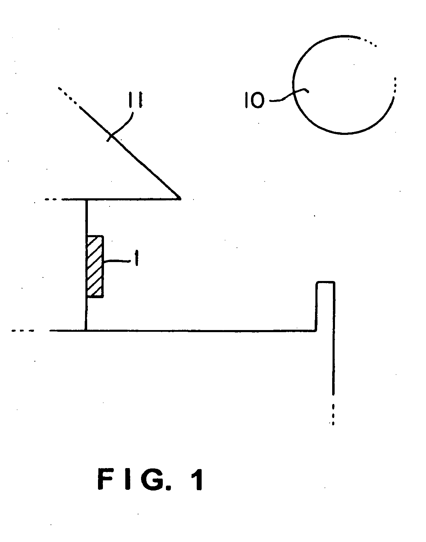

The capability of the surface of the sample to retain the cleanness against deposits and contaminants was determined by disposing the sample under a roofed portion in the rooftop of a building as shown in Fig. 1 and exposing the sample for four months.

As a result, the glazed title plate was found to be somewhat soiled, whereas no soil was found for sample 5.

Before and after the 4-month outdoor exposure test, the color difference was measured for the surface of the member. The color difference was measured with a color difference meter (Tokyo Denshoku Co., Ltd.). ΔE* was used as the color difference according to the Japanese Industrial Standards (JIS) H0201. As a result, the change in color difference between before and after the outdoor exposure test was 2 for the glazed tile plate, whereas the change in color difference was as small as 0.5 for sample 5.

### Example 3

Photocatalytic titania particles (Ishihara Sangyo Kaisha Ltd., ST-41, 5 g), the surface of which had been coated with 1,3,5,7-tetramethylcyclotetrasiloxane by bringing 1,3,5,7-tetramethylcyclotetrasiloxane into contact in a gaseous phase with the photocatalytic titania particles, Voncoat (Dainippon Ink and Chemicals, Inc., vinyl acetate/acryl copolymer, 0.6 g), and 25 ml of water were mixed together in a paint shaker. The mixture was coated on an aluminum substrate. In this case, the proportion of the resin component to the titania was 1 in terms of the volume ratio. The coating was cured at 120°C to prepare sample 19.

The contact angle of sample 19 with water was measured and found to be 70°.

Further, the surface of the sample was treated with an aqueous sodium hydroxide solution having pH 10, further treated with dilute hydrochloric acid, and then irradiated with sunlight to prepare sample 20.

The contact angle of sample 20 with water was measured. As a result, it was found that the contact angle was reduced to 56°.

The surface of sample 20 was coated with an aqueous Methylene Blue solution, and the coated sample was irradiated with sunlight in the same manner as described above. One day after the initiation of the irradiation, it was found that the dye was faded, confirming that antifouling effect by the photocatalytic decomposition could be attained.

### Example 4

A titanium oxide (anatase form) sol (Ishihara Sangyo Kaisha Ltd., STS-11), polytetrafluoroethylene (PTFE) particles (Daikin Industries, Ltd., D-1), and distilled water were mixed together. The mixture was stirred for 30 min to prepare a coating liquid. The coating liquid was coated on a soda lime glass substrate having a size of 10 cm square by spray coating. The coating was heat-treated at 380°C for 3 min, thereby forming a surface layer comprising 4 parts by weight of titanium oxide (anatase form) particles and 6 parts by weight of polytetrafluoroethylene particles. Next, a reflective coating of aluminum was formed by vacuum deposition on the backside of the glass plate to prepare mirror sample 11.

Observation of the surface of sample 11 showed that this sample had a surface layer having such a structure that both a hydrophilic portion, where photocatalytic oxide particles were exposed so as to contact with the outside air, and a water-repellent portion, where a water-repellent fluororesin were exposed to so as to contact with the outside air, were microscopically dispersed on the surface thereof.

The contact angle of the surface of sample 11 with water was measured. In this case, the contact angle of the sample with water was measured with a contact angle goniometer (Kyowa Interface Science Co., Ltd., CA-X150). The contact angle was measured 30 sec after dropping of a water droplet on the surface of the sample. As a result, the contact angle of the sample with water was 120°, that is, a value more than 90°. When.sample 11 was inclined, water droplets were rolled down.

The surface of sample 11 was then irradiated with ultraviolet light from an ultraviolet light source (Sankyo Denki, a black light blue (BLB) fluorescent lamp) at an irradiation intensity of 0.5 mW/cm² for about one day to prepare sample 12. The contact angle of sample 12 with water was measured and found to be 110°. When sample 12 was inclined, water droplets were rolled down.

### Example 5

A titanium oxide (anatase form) sol (Ishihara Sangyo Kaisha Ltd., STS-11), polytetrafluoroethylene (PTFE) particles (Daikin Industries, Ltd., D-1), and distilled water were mixed together. The mixture was stirred for 30 min to prepare a coating liquid. The coating liquid was coated on a slate substrate by spray coating. The coating was heat-treated at 380°C for 3 min, thereby forming a surface layer comprising 4 parts by weight of titanium oxide (anatase form) particles and 6 parts by weight of polytetrafluoroethylene particles. Thus, sample 21 was obtained.

Observation of the surface of sample 21 showed that this sample had a surface layer having such a structure that both a hydrophilic portion, where photocatalytic oxide particles were exposed so as to contact with the outside air, and a water-repellent portion, where a water-repellent fluororesin were exposed to so as to contact with the outside air, were microscopically dispersed on the surface thereof.

The contact angle of the surface of sample 21 with water was then measured. In this case, the contact angle of the sample with water was measured with a contact angle goniometer (Kyowa Interface Science Co., Ltd., CA-X150). The contact angle was measured 30 sec after dropping of a water droplet on the surface of the sample. As a result, the contact angle of the sample with water was 120°, that is, a value more than 90°. When sample 21 was inclined, water droplets were rolled down.

The surface of sample 21 was then irradiated with ultraviolet light from an ultraviolet light source (Sankyo Denki, a black light blue (BLB) fluorescent lamp) at an ultraviolet irradiation intensity of 0.5 mW/cm² for about one day to prepare sample 22. The contact angle of sample 22 with water was measured and found to be 110°. When sample 22 was inclined, water droplets were rolled down.

## Claims

1. A member comprising: a substrate; and a surface layer provided on the substrate, the surface layer comprising a hydrophobic resin and a photocatalytic oxide,
wherein the hydrophobic resin is selected from the group consisting of a fluororesin, an acrylic resin, a urethane resin, a polyester resin, a vinyl resin, PET, and an acrylic silicone, and
the photocatalytic oxide is selected from the group consisting of anatase form of titanium oxide, zinc oxide, tin oxide, ferric oxide, dibismuth trioxide, tungsten trioxide, and strontium titanate,
the hydrophobic resin and the photocatalytic oxide being present in a microscopically dispersed and exposed state on the outermost surface of the surface layer, the photocatalytic oxide being self-hydrophilified or functioning to hydrophilify the photocatalytic oxide still remaining unhydrophilified present around the photocatalytic oxide by photocatalytic action created in response to photoexcitation.

2. The member according to claim 1, wherein the surface layer further comprises an inorganic oxide which, together with the hydrophobic resin and the photocatalytic oxide, is microscopically dispersed and exposed on the outermost surface of the surface layer, the photocatalytic oxide functioning to hydrophilify the inorganic oxide by photocatalytic action in response to photoexcitation.

3. The member according to claim 1, wherein the surface layer is a layer comprising the hydrophobic resin, the photocatalytic oxide being dispersed in the layer, the hydrophobic resin and the photocatalytic oxide being present in a microscopically dispersed and exposed state on the outermost surface of the surface layer.

4. The member according to claim 3, wherein the surface layer further comprises an inorganic oxide which, together with the hydrophobic resin and the photocatalytic oxide, is microscopically dispersed and exposed on the outermost surface of the surface layer, the photocatalytic oxide functioning to hydrophilify the inorganic oxide by photocatalytic action in response to photoexcitation.

5. The member according to claim 1, wherein the surface layer comprises a layer, formed of a photocatalytic oxide, and a layer, formed of a hydrophobic resin, partially laminated on the layer formed of the photocatalytic oxide, the hydrophobic resin and the photocatalytic oxide being present in a microscopically dispersed and exposed state on the outermost surface of the surface layer as a result of the partial lamination of the hydrophobic resin layer on the layer formed of the photocatalytic oxide.

6. The member according to claim 5, wherein the layer formed of the photocatalytic oxide further comprises an inorganic oxide which, together with the hydrophobic resin and the photocatalytic oxide, is present in a microscopically dispersed and exposed state on the outermost surface of the surface layer, the photocatalytic oxide functioning to hydrophilify the inorganic oxide by photocatalytic action in response to photoexcitation.

7. The member according to any one of claims 1 to 6, wherein the inorganic oxide is selected from the group consisting of silica, alumina, water glass, silicate, aluminosilicate, zirconia, ceria, tin oxide, calcia, magnesia, and amorphous titania.

8. The member according to any one of claims 1 to 7, wherein the presence of a hydrophobic portion derived from a hydrophobic resin and a hydrophilic portion derived from the photocatalytic oxide or the inorganic oxide in a microscopically dispersed and exposed state on the outermost surface prevents both a hydrophilic material and a hydrophobic material from being deposited on the surface of the member, thus permitting the surface of the member to be kept clean.

9. The member according to any one of claims 1 to 8, wherein a hydrophobic portion derived from the hydrophobic resin and a hydrophilic portion derived from photocatalytic oxide or the inorganic oxide each are present in at least one place per 10 to 100 nm² on the outermost surface of the surface layer.

10. Use of the member according to claim 9, as an anti-thrombotenic material, an anti-protein-depositable material, and an anti-lipid-adhesion material.

11. Use of the member according to claim 9, as a contact lens or a urinary catheter, a percutaneous device, an artificial organ, a blood bag, a urine-collecting bag, a lung drainage, or a tube for connection between said members.

12. The member according to any one of claims 1 to 8, wherein a hydrophobic portion derived from the hydrophobic resin and a hydrophilic portion derived from the photocatalytic oxide or the inorganic oxide each are present in at least one place per 10 µm² to 1 µm² on the outermost surface of the surface layer.

13. Use of the member according to claim 12, as a surface material in a material for the bottom of a ship, an outer wall material, a bathroom material, a bathtub material, a material for a water tank for the appreciation, or a surface material for equipment utilizing circulating water in its area which comes into contact with the circulating water.

14. The member according to any one of claims 1 to 8, wherein a hydrophobic portion derived from the hydrophobic resin and a hydrophilic portion derived from the photocatalytic oxide or the inorganic oxide each are present in at least one place per 0.1 mm² on the outermost surface of the surface layer.

15. The member according to any one of claims 1 to 8, wherein a hydrophobic portion derived from the hydrophobic resin and a hydrophilic portion derived from the photocatalytic oxide or the inorganic oxide each are present in at least one place per 0.2µm² on the outermost surface of the surface layer.

16. The member according to any one of claims 1 to 8, wherein a hydrophobic portion derived from the hydrophobic resin and a hydrophilic portion derived from the photocatalytic oxide or the inorganic oxide each are present in at least one place per 1 mm² on the outermost surface of the surface layer.

17. Use of the member according to claim 15, as a building material for outdoors, a cover for a solar battery, a cover for a heat collector for a solar water heater, a handrail, an internal wall for a tunnel, a sound insulating wall, a sound barrier, a guard fence, a road structure, a blind, an insulator, a wheel, or a body for a vehicle.

18. The member according to claim 15, which has such a property that prevents growth of water droplets deposited on the surface thereof.

19. Use of the member according to claim 18, as a windowpane for a building, a windowpane for a vehicle, a windshield for a vehicle, a mirror for a vehicle, a road mirror, a lavatory mirror, a cover for an instrument board, a lens for spectacles, a helmet shield, goggles, or a showcase for retention of heat.

20. Use of the member according to claim 16, as a fin for a heat exchanger, an insulator, a bathtub, a counter for a lavatory, a kitchen counter, a roof material, a roof gutter, an antenna, or a power line.

21. The member according to any one of claims 1 to 9, 12, 14 to 16 and 18, wherein the surface layer further comprises silver, copper, or zinc.

## Patentansprüche

1. Element umfassend: ein Substrat, und eine Oberflächenschicht, welche auf dem Substrat bereitgestellt ist, wobei die Oberflächenschicht ein hydrophobes Harz und ein photokatalytisches Oxid umfasst,
wobei das hydrophobe Harz gewählt ist aus der Gruppe bestehend aus Fluorharz, einem Acrylharz, einem Uretanharz, einem Polyesterharz, einem Vinylharz, PET und einem Acrylsilikon, und
das photokatalytische Oxid aus der Gruppe gewählt ist, bestehend aus der Anastasform von Titanoxid, Zinkoxid, Zinnoxid, Eisen-III-Oxid, Dibismuthtrioxid, Wolframtrioxid und Strontiumtitanat,
das hydrophobe Harz und das photokatalytische Oxid in einem mikroskopisch dispergierten und freiliegenden Zustand an der äußersten Oberfläche der Oberflächenschicht vorhanden sind, das photokatalytische Oxid selbst hydrophilisierend ist oder dient dazu, zu hydrophilisieren, das photokatalytische Oxid ist selbst hydrophilisierend oder zum hydrophilisieren dient, das katalytische Oxid um das photokatalytische Oxid herum unhydrophilisiert vorhanden bleibt, durch photokatalytische Wirkung, welche in Reaktion auf die Photoerregung erzeugt wird.

2. Element nach Anspruch 1, wobei die Oberflächenschicht des Weiteren ein anorganisches Oxid umfasst, welches zusammen mit dem hydrophoben Harz und dem photokatalytischen Oxid, mikroskopisch dispergiert ist und an der äußersten Schicht der Oberflächenschicht freiliegt, wobei das photokatalytische Oxid dazu dient, das anorganische Oxid durch photokatalytische Wirkung in Reaktion auf die Photoanregung zu hydrophilisieren.

3. Element nach Anspruch 1, wobei die Oberflächenschicht eine Schicht ist, welche das hydrophobe Harz umfasst, das photokatalytische Oxid in der Schicht dispergiert ist, das hydrophobe Harz und das photokatalytische Oxid in einem mikroskopisch dispergierten und freiliegenden Zustand in der äußersten Schicht der Oberflächenschicht vorhanden sind.

4. Element nach Anspruch 3, wobei die Oberflächenschicht des Weiteren ein anorganisches Oxid umfasst, welches zusammen mit dem hydrophoben Harz und dem photokatalytischen Oxid mikroskopisch dispergiert ist und an der äußersten Oberfläche der Oberflächenschicht freiliegt, wobei das photokatalytische Oxid dazu dient, das anorganische Oxid durch photokatalytische Wirkung in Reaktion auf Photoanregung zu hydrophilisieren.

5. Element nach Anspruch 1, wobei die Oberflächenschicht eine Schicht umfasst, gebildet aus einem photokatalytischen Oxid, und eine Schicht umfasst, gebildet aus einem hydrophoben Harz, partiell laminiert auf der Schicht, welche aus dem photokatalytischen Oxid gebildet ist, wobei das hydrophobe Harz und das photokatalytische Oxid in einem mikroskopisch dispergierten und freiliegendem Zustand auf der äußersten Oberfläche der Oberflächenschicht vorhanden sind, als ein Ergebnis der partiellen Laminierung der hydrophoben Harzschicht auf der Schicht, welche aus dem photokatalytischen Oxid gebildet ist.

6. Element nach Anspruch 5, wobei die aus dem photokatalytischen Oxid gebildete Schicht des Weiteren ein anorganisches Oxid umfasst, welches zusammen mit dem hydrophoben Harz und dem photokatalytischen Oxid in einem mikroskopisch dispergierten und freiliegendem Zustand auf der äußersten Oberfläche der Oberflächenschicht vorhanden ist, wobei das photokatalytische Oxid dazu dient, das anorganische Oxid durch photokatalytische Wirkung in Reaktion auf Photoanregung zu hydrophilisieren.

7. Element nach einem der Ansprüche 1 bis 6, wobei das anorganische Oxid gewählt ist aus der Gruppe bestehend aus Siliziumdioxid, Aluminiumoxid, Wasserglas, Silikat, Aluminiumsilikat, Zirkoniumdioxid, Zerdioxid, Zinnoxid, Kalziumdioxid, Magnesiumoxid und amorphen Titandioxid.

8. Element nach einem der Ansprüche 1 bis 7, wobei die Anwesenheit eines hydrophoben Teils abgeleitet aus einem hydrophoben Harz und eines hydrophilen Teils, abgeleitet aus dem photokatalytischen Oxid oder dem anorganischen Oxid in einem mikroskopisch dispergierten und freiliegendem Zustand an der äußersten Oberfläche verhindert, dass sowohl ein hydrophiles Material als auch ein hydrophobes Material an der Oberfläche des Elementes abgeschieden wird, wodurch ermöglicht wird, dass die Oberfläche des Elementes sauber gehalten wird.

9. Element nach einem der Ansprüche 1 bis 8, wobei ein hydrophober Teil abgeleitet aus dem hydrophoben Harz und ein hydrophiler Teil, abgeleitet aus dem photokatalytischen Oxid oder dem anorganischen Oxid jeweils an wenigstens einer Stelle pro bis 100 nm² auf der äußersten Oberfläche der Oberflächenschicht vorhanden sind.

10. Verwendung des Elementes nach Anspruch 9 als ein antitrombogenes Material, ein Antiproteinablagerungsmaterial und ein Antilipiladhäsionsmaterial.

11. Verwendung des Elementes nach Anspruch 9 als eine Kontaktlinse oder ein Blasenkatheter, eine perkutane Einrichtung, ein künstliches Organ, ein Blutbeutel, ein Urinsammelbeutel, eine Lungendrainage oder ein Rohr zur Verbindung zwischen den Elementen.

12. Element nach einem der Ansprüche 1 bis 8, wobei ein hydrophober Teil abgeleitet von dem hydrophoben Harz und ein hydrophiler Teil abgeleitet von dem photokatalytischen Oxid oder dem anorganischen Oxid jeweils an wenigstens einer Stelle pro 10 µm² bis 1 µm² an der äußersten Oberfläche der Oberflächenschicht vorhanden sind.

13. Verwendung des Elementes nach Anspruch 12 als ein Oberflächenmaterial in einem Material für den Boden eines Schiffs, einem Außenwandmaterial, einem Badezimmermaterial, einem Badewannenmaterial, einem Material für einen Wasserbehälter zur Aufwertung oder ein Oberflächenmaterial für Geräte, welche zirkulierendes Wasser in einem Bereich einsetzen, welcher in den Kontakt mit dem zirkulierenden Wasser kommt.

14. Element nach einem der Ansprüche 1 bis 8, wobei ein hydrophober Teil abgeleitet von dem hydrophoben Harz und ein hydrophiler Teil, abgeleitet von dem photokatalytischen Oxid oder dem anorganischen Oxid jeweils an wenigstens einer Stelle pro 0,1 mm² an der äußersten Oberfläche der Oberflächenschicht vorhanden sind.

15. Element nach einem der Ansprüche 1 bis 8, wobei ein hydrophober Bereich abgeleitet von dem hydrophoben Harz und ein hydrophiler Bereich, abgeleitet von dem photokatalytischen Oxid oder dem anorganischen Oxid jeweils an wenigstens einer Stelle pro 0,2 µm² an der äußersten Oberfläche der Oberflächenschicht vorhanden sind.

16. Element nach einem der Ansprüche 1 bis 8, wobei ein hydrophober Bereich abgeleitet von dem hydrophoben Harz und ein hydrophiler Bereich, abgeleitet von dem photokatalytischen Oxid oder dem anorganischen Oxid jeweils an wenigstens einer Stelle pro 1 mm² auf der äußersten Schicht der Oberflächenschicht vorhanden sind.

17. Verwendung des Elementes nach Anspruch 15 als ein Baumaterial für außen, eine Abdeckung für eine Solarbatterie, eine Abdeckung für einen Wärmesammler für einen Solar-Wassererwärmer, einen Handlauf, eine Innenwand für einen Tunnel, eine Lärmisolationswand, eine Lärmbarriere, einen Fangzaun, eine Straßenstruktur, eine Blende, einen Isolator, ein Rad oder einen Köper für ein Fahrzeug.

18. Element nach Anspruch 15, welches eine Eigenschaft hat, welche das Wachstum von Wassertröpfchen verhindert, die auf einer Oberfläche abgeschieden sind.

19. Verwendung des Elementes nach Anspruch 18 als eine Fensterscheibe für ein Gebäude, eine Fensterscheibe für ein Fahrzeug, eine Windschutzscheibe für ein Fahrzeug, einen Spiegel für ein Fahrzeug, einen Straßenspiegel, einen Badezimmerspiegel, eine Abdeckung für ein Armaturenbrett, eine Linse für Brillen, einen Helmschutz, Schutzbrillen, oder eine Vitrine zum Halten von Wärme.

20. Verwendung des Elementes nach Anspruch 16 als einen Flügel bzw. eine Rippe für einen Wärmetauscher, einen Isolator, eine Badewanne, eine Theke für einen Waschraum, eine Theke für eine Küche, ein Dachmaterial, eine Dachrinne, eine Antenne oder eine Starkstromleitung.

21. Element nach einem der Ansprüche 1 bis 9, 12, 14 bis 16 und 18, wobei die Oberflächenschicht des Weiteren Silber, Kupfer oder Zink umfasst.

## Revendications

1. Organe comprenant : un substrat ; et une couche de surface disposée sur le substrat, là couche de surface comprenant une résine hydrophobe et un oxyde photocatalytique,
dans lequel la résine hydrophobe est choisie dans le groupe consistant en une fluororésine, une résine acrylique, une résine d'uréthane, une résine de poly(ester), une résine de vinyle, le PET et une silicone acrylique, et
l'oxyde photocatalytique est choisi dans le groupe consistant en la forme anatase de l'oxyde de titane, l'oxyde de zinc, l'oxyde d'étain, l'oxyde ferrique, le trioxyde de dibismuth, le trioxyde de tungstène et le titanate de strontium,
la résine hydrophobe et l'oxyde photocatalytique étant présents dans un état microscopiquement dispersé et exposé sur la surface la plus externe de la couche de surface, l'oxyde photocatalytique étant rendu autohydrophile ou fonctionnant pour rendre hydrophile l'oxyde photocatalytique restant encore non hydrophile présent autour de l'oxyde photocatalytique par action photocatalytique créée en réponse à une photoexcitation.

2. Organe selon la revendication 1, dans lequel la couche de surface comprend en outre un oxyde inorganique qui, conjointement avec la résine hydrophobe et l'oxyde photocatalytique, est dispersé microscopiquement et exposé sur la surface la plus externe de la couche de surface, l'oxyde photocatalytique fonctionnant pour rendre hydrophile l'oxyde inorganique par action photocatalytique en réponse à une photoexcitation.

3. Organe selon la revendication 1, dans lequel la couche de surface est une couche comprenant la résine hydrophobe, l'oxyde photocatalytique étant dispersé dans la couche, la résine hydrophobe et l'oxyde photocatalytique étant présents dans un état microscopiquement dispersé et exposé sur la surface la plus externe de la couche de surface.

4. Organe selon la revendication 3, dans lequel la couche de surface comprend en outre un oxyde inorganique qui, conjointement avec la résine hydrophobe et l'oxyde photocatalytique, est dispersé microscopiquement et exposé sur la surface la plus externe de la couche de surface, l'oxyde photocatalytique fonctionnant pour rendre hydrophile l'oxyde inorganique par action photocatalytique en réponse à une photoexcitation.

5. Organe selon la revendication 1, dans lequel la couche de surface comprend une couche, formée d'un oxyde photocatalytique et une couche, formée d'une résine hydrophobe, partiellement stratifiée sur la couche formée de l'oxyde photocatalytique, la résine hydrophobe et l'oxyde photocatalytique étant présents dans un état microscopiquement dispersé et exposé sur la surface la plus externe de la couche de surface par suite de la stratification partielle de la couche de résine hydrophobe sur la couche formée de l'oxyde photocatalytique.

6. Organe selon la revendication 5, dans lequel la couche formée de l'oxyde photocatalytique comprend en outre un oxyde inorganique qui, conjointement avec la résine hydrophobe et l'oxyde photocatalytique, est présent dans un état microscopiquement dispersé et exposé sur la surface la plus externe de la couche de surface, l'oxyde photocatalytique fonctionnant pour rendre hydrophile l'oxyde inorganique par action photocatalytique en réponse à une photoexcitation.

7. Organe selon l'une quelconque des revendications 1 à 6, dans lequel l'oxyde inorganique est choisi dans le groupe consistant en la silice, l'alumine, le verre soluble, le silicate, l'aluminosilicate, la zircone, l'oxyde de cérium, l'oxyde d'étain, l'oxyde de calcium, la magnésie et l'oxyde de titane amorphe.

8. Organe selon l'une quelconque des revendications 1 à 7, dans lequel la présence d'une portion hydrophobe dérivée d'une résine hydrophobe et d'une portion hydrophile dérivée de l'oxyde photocatalytique ou de l'oxyde inorganique dans un état microscopiquement dispersé et exposé sur la surface la plus externe empêche à la fois un matériau hydrophile et un matériau hydrophobe de se déposer sur la surface de l'organe, permettant ainsi de maintenir la surface de l'organe propre.

9. Organe selon l'une quelconque des revendications 1 à 8, dans lequel une portion hydrophobe dérivée de la résine hydrophobe et une portion hydrophile dérivée de l'oxyde photocatalytique ou de l'oxyde inorganique sont chacune présentes au moins à un endroit pour 10 à 100 nm² sur la surface la plus externe de la couche de surface.

10. Utilisation de l'organe selon la revendication 9, comme matériau antithrombotique, matériau antidéposition de protéines et matériau anti-adhérence de lipides.

11. Utilisation de l'organe selon la revendication 9, comme verre de contact ou cathéter urinaire, dispositif percutané, organe artificiel, poche à sang, poche de collecte d'urine, purge des poumons ou tube de raccord entre lesdits organes.

12. Organe selon l'une quelconque des revendications 1 à 8, dans lequel une portion hydrophobe dérivée de la résine hydrophobe et une portion hydrophile dérivée de l'oxyde photocatalytique ou de l'oxyde inorganique sont chacune présentes à au moins un endroit pour 10 µm² à 1 µm² sur la surface la plus externe de la couche de surface.

13. Utilisation de l'organe selon la revendication 12, comme matériau de surface dans un matériau pour le fond d'un bateau, un matériau de paroi externe, un matériau pour salle de bain, un matériau pour baignoire, un matériau pour réservoir d'eau pour les loisirs, ou un matériau de surface pour un équipement utilisant de l'eau de circulation dans sa zone venant en contact avec l'eau de circulation.

14. Organe selon l'une quelconque des revendications 1 à 8, dans lequel une portion hydrophobe dérivée de la résine hydrophobe et une portion hydrophile dérivée de l'oxyde photocatalytique ou de l'oxyde inorganique sont chacune présentes à au moins un endroit pour 0,1 mm² sur la surface la plus externe de la couche de surface.

15. Organe selon l'une quelconque des revendications 1 à 8, dans lequel une portion hydrophobe dérivée de la résine hydrophobe et une portion hydrophile dérivée de l'oxyde photocatalytique ou de l'oxyde inorganique sont chacune présentes à au moins un endroit pour 0,2 µm² sur la surface la plus externe de la couche de surface.

16. Organe selon l'une quelconque des revendications 1 à 8, dans lequel une portion hydrophobe dérivée de la résine hydrophobe et une portion hydrophile dérivée de l'oxyde photocatalytique ou de l'oxyde inorganique sont chacune présentes à au moins un endroit pour 1 mm² sur la surface la plus externe de la couche de surface.

17. Utilisation de l'organe selon la revendication 15, comme matériau de construction extérieur, enveloppe de protection pour une pile solaire, enveloppe pour un capteur de chaleur pour un chauffe-eau solaire, garde-corps, mur interne pour un tunnel, cloison insonore, barrière acoustique, clôture de défense, ouvrage routier, store, isolant, roue ou carrosserie pour un véhicule.

18. Organe selon la revendication 15, qui possède la propriété d'empêcher la croissance de gouttelettes d'eau déposées à sa surface.

19. Utilisation de l'organe selon la revendication 18, comme vitre pour un bâtiment, vitre pour un véhicule, pare-brise pour un véhicule, rétroviseur, miroir de circulation, miroir de toilettes, revêtement pour un tableau de bord, verre pour lunettes, pare-visage, lunettes de sécurité ou vitrine pour rétention de la chaleur.

20. Utilisation de l'organe selon la revendication 16, comme ailette pour un échangeur de chaleur, isolant, baignoire, comptoir pour des toilettes, comptoir de cuisine, matériau de couverture, gouttières, antenne ou ligne électrique.

21. Organe selon l'une quelconque des revendications 1 à 9, 12, 14 à 16 et 18, dans lequel la couche de surface comprend en outre de l'argent, du cuivre ou du zinc.
